(19) Europäisches Patentamt
European Patent Office
Office européen des brevets

(11) Publication number: **0 161 736**
**B1**

(12) # EUROPEAN PATENT SPECIFICATION

(45) Date of publication of patent specification: **19.04.89**

(21) Application number: **85300620.3**

(22) Date of filing: **30.01.85**

(51) Int. Cl.[4]: **C 08 L 23/34**, C 08 L 63/00, C 08 G 59/54, C 08 G 59/50, C 09 D 3/58, C 09 D 3/733

(54) **Chlorosulfonated polyethylene coating composition.**

(30) Priority: **08.02.84 US 578031**
**28.12.84 US 687363**

(43) Date of publication of application:
**21.11.85 Bulletin 85/47**

(45) Publication of the grant of the patent:
**19.04.89 Bulletin 89/16**

(84) Designated Contracting States:
**BE DE FR GB NL SE**

(56) References cited:
**AU-B- 410 370**
**BE-A- 785 607**
**DE-A-2 152 237**
**FR-A-1 301 717**
**GB-A-1 268 154**
**GB-A-2 112 388**
**US-A-3 026 294**

(73) Proprietor: **E.I. DU PONT DE NEMOURS AND COMPANY**
**1007 Market Street**
**Wilmington Delaware 19898 (US)**

(72) Inventor: **Vasta, Joseph Anthony**
**1412 Jan Drive**
**Webster Farms, Wilmington, DE 19803 (US)**

(74) Representative: **Woodcraft, David Charles et al**
**BROOKES & MARTIN High Holborn House**
**52/54 High Holborn**
**London, WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

This invention is related to a coating composition and in particular to a chlorosulfonated polyethylene coating composition that cures at ambient temperatures.

Chlorosulfonated ethylene polymers are inert to strong acids and strong bases and are resistant to weathering and salt water corrosion and are tough and abrasion resistant. Coatings of these polymers are extremely useful for protecting metal substrates exposed to chemicals and weathering. Typically, these coatings would be useful in chemical plants and oil refineries to coat pipes, vessels, storage tanks, and other equipment, useful for coatings for offshore oil well platforms, barges, and ships, and useful for protective coatings in combination with fluorocarbon polymer coatings for the interior of smoke stacks of utility companies. However, conventional coatings formed with chlorosulfonated ethylene polymers either require curing at elevated temperatures which is not possible with the aforementioned large structures or require a long time for curing such as one to two weeks during which time the coating can easily be damaged. A coating composition is needed that will cure rapidly at ambient temperatures.

The coating composition of this invention is directed to a composition that can be cured rapidly at ambient temperatures, has excellent adhesion to a variety of substrates, and is weatherable, corrosion and abrasion resistant.

A coating composition containing 10—80% by weight of binder and 20—90% by weight of an organic solvent; wherein the binder comprises

(1) a chlorosulfonated polyethylene having a weight average molecular weight of 75,000 to 300,000 determined by gel permeation chromatography and having a chlorine content of 20 to 50% by weight and a sulfur content of 0.7 to 2.0% by weight;

(2) an epoxy resin;

(3) a polyamine curing agent of the formula

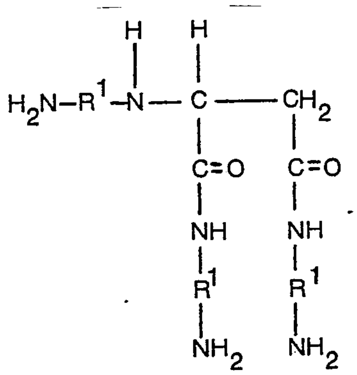

or

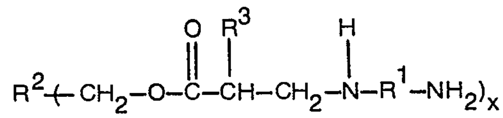

where $R^1$ is an aliphatic or cycloaliphatic hydrocarbon radical, $R^2$ is a carbon atom or a hydrocarbon group, $R^3$ is H or $CH_3$, X is 3 or 4; when x is 3 $R^2$ is a hydrocarbon group and when x is 4 $R^2$ is a carbon atom; and optionally,

(4) a bicyclic amidine or a strong organic base.

The coating composition contains 10—80% by weight binder and 20—90% by weight organic solvent. The binder is a blend of a chlorosulfonated polyethylene, an epoxy resin and a polyamine curing agent. One of the advantages of the composition when it contains a bicyclic amidine is that it can be cured rapidly at ambient temperatures and baking is not required. Therefore, the composition can be used on large structures such as ships, barges, chemical storage tanks, chemical reactors and other typical large equipment used in refineries and chemical plants. These structures could not be subjected to baking temperatures using conventional techniques and therefore conventional compositions that require baking cannot be used.

Without the bicyclic amidine or strong organic base, the composition can be cured by baking at elevated temperatures of about 40—70°C for about 15 minutes to 3 hours.

The chlorosulfonated polyethylene is a partially chlorinated polyethylene containing sulfonyl chloride groups and has the formula

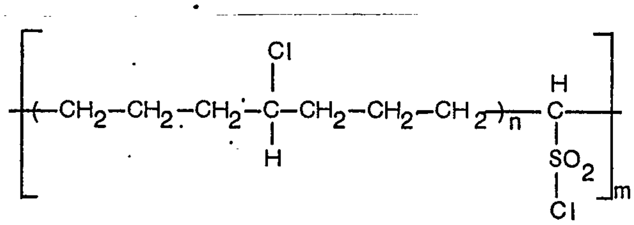

where m and n are positive integers of 5—25. The polymer has a weight average molecular weight of 75,000 to 300,000 and preferably, 100,000 to 150,000 to form a high quality composition. Polymers in the

lower end of the molecular weight range are preferred for forming a composition with higher binder content.

Molecular weight, as used herein, is determined by gel permeation chromatography using polymethyl methacrylate as a standard.

The chlorosulfonated polyethylene has a chlorine content of 20—50% by weight and preferably 29—43% by weight and a sulfur content of 0.7 to 2.0% by weight and preferably 1.1—1.5% by weight.

An epoxy resin that can be used in the composition has the formula

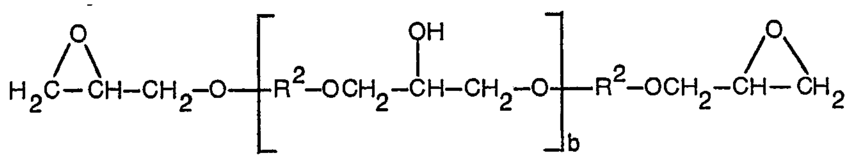

where b is a positive integer of 0.5 to 4. Preferably, the epoxy resin is the polymerization product of epichlorohydrin and bisphenol A. In a preferred epoxy resin, $R^2$ in the above formula is

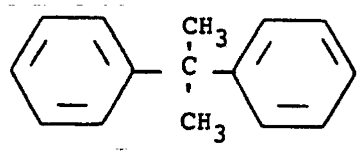

Typical of these preferred epoxy resins are "Epon"® 828 having an equivalent weight of about 185—192 manufactured by Shell Chemical Company and DER 331 having an equivalent weight of about 182—190 manufactured by The Dow Chemical Company. The equivalent weight is the grams of resin that contain one gram equivalent of epoxide.

An epoxy novolac resin that can be used in the composition has the formula

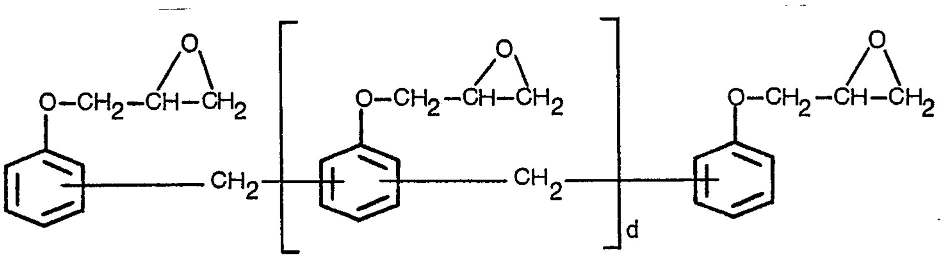

where d is a positive integer of 0.2—2. Preferred epoxy novolac resins are DEN 431 where d has an average value of 0.2, DEN 438 where d has an average value of 1.6 and DEN 439 where d has an average value of 1.8. These resins are manufactured by the Dow Chemical Company.

The coating composition contains a polyamine curing agent of the formula

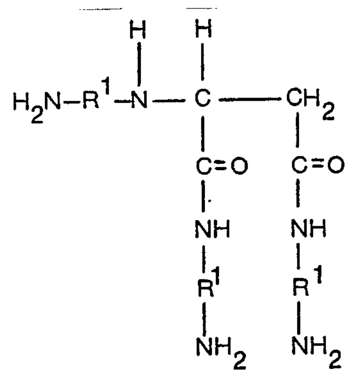

where $R^1$ is an aliphatic or cycloaliphatic hydrocarbon radical.

The curing agent is prepared by reacting 3 moles of an aliphatic or cycloaliphatic polyamine with 1 mole of a dialkyl maleate. Reaction temperatures of about 100—150°C are used for about 1—6 hours to form the curing agent while an alkanol resulting from the reaction is removed.

Typical polyamines used to form the curing agent are isophorone diamine which is 3-aminoethyl-3,5,5-trimethyl cyclohexylamine, hexamethylene diamine, ethylene diamine, 1,4-cyclohexane bis(methylamine), 1,2-diaminopropane, propylene diamine, diethyl ether diamine and trimethyl hexamethyl methylene diamine. Typical dialkyl maleates are dimethyl maleate, diethyl maleate, ethyl methyl maleate, dipropyl maleate, dibutyl maleate.

One preferred curing agent is the reaction product of isophorone diamine and dimethyl maleate and has the following structural formula

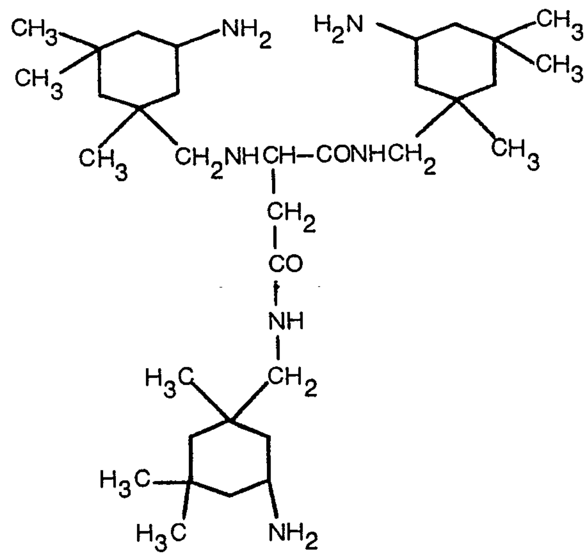

A polyamine curing agent of the following formula can be used also:

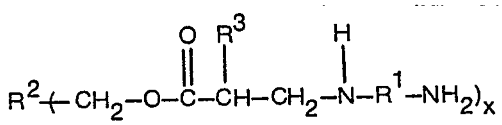

where R is defined above, $R^2$ is a carbon atom or a hydrocarbon group, $R^3$ is H or $CH_3$; where x is 3 when $R^2$ is a hydrocarbon group and x is 4 when $R^2$ is a carbon atom.

This ester curing agent is prepared through a Michael's reaction in which a multifunctional acrylate or methacrylate is reacted with a polyamine. In the preparation of the curing agent the polyamine is heated to about 100—150°C and then reacted with the polyamine for about a 1—6 hour period to form an amine terminated curing agent.

Typical multifunctional acrylates or methacrylates that can be used to form the curing agent are trimethylol propane acrylate, trimethylol propane methacrylate, trimethylol butane methacrylate or acrylate, pentaerythritol acrylate, pentaerythritol methacrylate. Typically, $R^2$ is either a carbon atom or a hydrocarbon group having 2—4 carbon atoms.

The above polyamines are used to form this curing agent. Isophorone diamine is preferred.

Preferred polyamine curing agents are the reaction product of the following isophorone diamine and trimethylol propane acrylate; isophorone diamine and pentaerythritol acrylate; hexamethylene diamine and trimethylol propane acrylate; and hexamethylene diamine and pentaerythritol acrylate.

The binder of the coating composition preferably contains 35—90% by weight of the chlorosulfonated polyethylene, 7—60% by weight of epoxy resin, and 3—20% by weight of the polyamine curing agent.

To form an ambient temperature curing composition, to decrease curing time and increase toughness of finishes of the composition, a bicyclic amidine is used in the composition. The composition preferably contains 0.1—3% by weight, based on the weight of the binder, of the bicyclic amidine. Preferably, the composition contains 0.2—3% by weight, based on the weight of the binder, of the bicyclic amidine. One preferred bicyclic amidine is 1,8-diaza-bicyclo(5,4,0)-undecene-7.

In the place of the bicyclic amidine, 0.1—3% by weight, based on the weight of the binder, of a strong organic base can be used. Typically useful bases are tertiary alkyl ammonium hydroxide such as tertiary ethyl, propyl or butyl ammonium hydroxide, tertiary alkyl ammonium methoxide such as tertiary ethyl, propyl or butyl ammonium methoxide.

1 to 4% by weight, based on the weight of the binder, of phenol can be added to the composition to decrease curing time and enhance toughness of the resulting finish.

Preferably, the binder of the coating composition contains 40—85% by weight of the chlorosulfonated polyethylene, 9—44% by weight of epoxy resin, 3—20% by weight of the polyamine curing agent, and 0.1—3% by weight of bicyclic amidine.

0.5—5% by weight, based on the weight of the binder, of a chloride ion scavenger can be added to the composition. The metal ion of the scavenger reacts with any residual chlorides which may be on a substrate being painted thereby reducing corrosion of the substrate. For example, the steel on oil well platforms in the ocean is covered with a salt residue. If the salt on the surface of the steel is not bound in some manner, corrosion starts and rapidly accelerates.

Typical chloride ion scavengers that can be used are as follows: lead naphthenate which is preferred, lead tallate and lead octoate.

When the composition is applied over substrates that are moist or wet, 0.1—3% by weight, based on the weight of the binder, of a silicone wetting agent may be added to the composition to ensure thorough wetting of the surface and penetration to the metal. Typical silicone wetting agents are as follows: oxyethylene methyl siloxanes such as "Silwet" L—77 and "Silwet" L—7607 made by Union Carbide and other condensation products of ethylene oxide and alkyl siloxane. "Silwet" is a Trade Mark.

Generally, the composition is pigmented and preferably contains pigments in a pigment to binder weight ratio of 20:100 to 200:100. The pigments are dispersed in the composition by conventional techniques such as ball milling, sand grinding, attritor grinding. Typical pigments that can be used are as follows: metallic oxides such as titanium dioxide, iron oxide, zinc oxide, chromate pigments such as lead chromate, filler pigments such as barytes, talc, china clay, phosphate pigments such as zinc phosphate, zinc phospho oxide, carbon black, black molybdate oxide pigments, barium metaborate pigments.

One particularly useful combination of pigments for a corrosion resistant primer is the following: titanium dioxide, barytes, talc, carbon black and zinc phospho oxide.

The composition generally is provided in two components. Component A contains chlorosulfonated polyethylene, epoxy resin and pigments. Component B contains the polyamine curing agent and optionally a bicyclic amidine. The two components are blended together a relatively short time before application and the resulting composition is applied to a substrate.

Preferably, solvents used in the composition are chosen to provide curing at ambient temperatures and have a high evaporation rate at these temperatures. Typically useful solvents are as follows: alcohols such as methanol, ethanol, propanol, isopropanol, benzyl alcohol, acetates such as ethyl acetate and other solvent such as toluene, xylene.

The coating composition can be applied by conventional methods such as spraying, electrostatic spraying, brushing, dipping, flow coating. The composition can be applied to a variety of substrates such as steel, iron, painted steel, treated steel such as phosphatized steel, aluminum, plastics, wood, glass. The composition can be fully cured as demonstrated by resistance to solvents such as methyl ethyl ketone in about 24 to 48 hours. Higher curing temperatures reduce the curing time; for example, the finish can be heated to 40—70°C for 0.5—2.0 hours for rapid curing. The resulting finish has excellent adhesion to the substrate, good corrosion resistance, is weatherable and durable and with proper pigmentation can be used as a primer or as a topcoat. The composition is particularly useful as an overcoat primer for steel substrates coated with an inorganic zinc primer.

One particularly chemical resistant and durable combination of finishes comprises a primer layer about 125 to 150 microns (μm) thick on a steel substrate of the cured composition of this invention and a top layer that is in superimposed adherence to this primer layer and is about 500 to 750 microns (μm) thick of a cured fluorocarbon polymer of vinylidene fluoride and hexafluoropropylene.

The coating composition is useful for protecting the grids of lead acid storage batteries. The life of conventional lead-acid storage batters can be increased, the power output of these batteries can be increased without an increase in battery size or the size of the battery can be decreased without a decrease in power output by coating the lead grids used to make the electrodes of the batteries. The coating adheres to the lead grid, is impervious to the sulfuric acid used in the battery, is electrically conductive and has a low electrical resistance.

To be an effective coating for the grids of electric storage batteries, the composition must be electrically conductive and have a low resistance. The composition contains conductive pigments such as carbon black, graphite in a pigment to binder weight ratio of 50/100 to 300/100 to provide an electrically conductive film. A 25 microns (μm) thick film of the composition in its dried state has an electrical resistance of 1—50 ohms and preferably 5—20 ohms.

Typical conductive pigments that can be used are carbon black pigments such as furnace black and acetylene black and graphite. One preferred carbon black is Gulf acetylene black. Preferably, a mixture of carbon black pigments and finely divided graphite are used. Transition metal oxides also are useful conductive pigments such as lead oxide, magnetite, titanium suboxide having the formula TiOx where x is less than 2, ruthenium oxide, mixtures of ruthenium oxide and titanium suboxide and the like.

Typically, the grids of lead acid storage batteries are made from antimony lead alloys or calcium lead alloys. Preferably, a thin coating an amino silane is applied first. Typically useful amino silanes are gamma amino propyl trimethoxy silane, gamma glycidoxy trimethoxy silane, N-(2-aminoethyl)-3-amino-propyl trimethoxysilane and 3[2(vinylbenzyl amino)ethyl amino]propyl trimethoxysilane. Then a coating of a the composition of this invention is applied to the grid by spray application and then baked at 40—70°C. Generally, the resulting coating is about 20—50 microns thick and has excellent conductivity.

Batteries made from such coated grids have a life of about 2—3 times that of batteries made with uncoated grids. Alternatively, thinner grids can be used which reduce battery size by about one half to one third without decreasing the life of the battery in comparison to a battery made with uncaoted grids. By maintaining the size and weight of the battery to that of a conventional battery but using thinner coated grids, the power output of the battery can be increased 2—3 times in comparison to a conventional battery made with uncoated grids.

The following example illustrates the invention. All parts and percentages are on a weight basis unless

otherwise indicated. Molecular weights are determined by gel permeation chromatography using polymethyl methacrylate as a standard.

Example 1

The following constituents were blended together and charged into a ball mill and ground until a uniform dispersion was formed:

| | Parts By Weight |
|---|---|
| Chlorosulfonated polyethylene solution (25% solids in toluene solvent of a chlorosulfonated polyethylene having a weight average molecular weight of about 115,000 determined by gel permeation chromatography and contains about 43% chlorine and about 1.4% sulfur) | 44.75 |
| D.E.R. 331 epoxy resin (liquid epoxy resin of bisphenol A and epichlorohydrin having an epoxide equivalent weight of about 182—190 and a viscosity measured at 25°C of 11,000—14,000 mPas | 4.79 |
| Titanium dioxide pigment | 9.93 |
| Barium sulfate pigment | 7.61 |
| Talc | 11.68 |
| Ethyl acetate | 8.87 |
| Toluene | 6.08 |
| "Fluorad" FC 430 (Trade Mark) solution (2% solution in toluene of a nonionic fluoro-chemical surfactant) | 0.56 |
| Total | 94.27 |

Composition B was prepared by blending together the following constituents:

| | Parts By Weight |
|---|---|
| Polyamine curing agent solution (55% solids in isopropanol of the reaction product of 3 moles of isophorone diamine and dimethyl maleate) | 2.28 |
| Bicyclic amidine [1,8-diaza-bicyclo (5,4,0)undecene-7] | 0.16 |
| Isopropanol | 3.29 |
| Total | 5.73 |

Composition B was thoroughly blended with the pigment dispersion prepared above and reduced with toluene to a spray viscosity of about 25 seconds measured with a #2 Zahn cup to form Coating Composition 1. Coating Composition 1 was sprayed onto a grit blasted steel and aluminum panels. In each case thick films were applied by allowing flash drying between each pass on spray application. The coatings were allowed to dry at ambient temperatures and gave a tack free film about 125 microns thick in about 15 minutes. In about 24 hours, the coatings were resistant to methyl ethyl ketone. After 3—7 days, the coatings were fully cured and were resistant to solvents, acids and alkali and had excellent durability and weatherability.

A gray primer composition was prepared as follows:

| | Parts By Weight |
|---|---|
| Chlorosulfonated polyethylene solution (described above) | 38.84 |
| Epoxy resin (described above) | 6.51 |
| Titanium dioxide pigment | 7.69 |
| Barium sulfate pigment | 6.06 |
| "Nalzin" 2 pigment ("Nalzin" is a Trade Mark) (zinc phospho oxide pigment) | 7.69 |
| Talc | 9.23 |
| Carbon black pigment | 0.16 |
| Ethyl acetate | 8.51 |
| Toluene | 5.89 |
| "Fluorad" FC 430 solution (described above) | 0.56 |
| Total | 91.12 |

The above constituents were blended together and charged into a ball mill until a uniform dispersion was formed.

Composition C was prepared by blending together the following constituents:

| | Parts By Weight |
|---|---|
| Polyamine curing agent (described above) | 3.18 |
| Phenol | 0.53 |
| Bicyclic amidine (described above) | 0.18 |
| Benzyl alcohol | 0.18 |
| Isopropanol | 4.81 |
| Total | 8.88 |

Composition C was thoroughly blended with the gray dispersion and the resulting primer composition was reduced to a spray viscosity with toluene and sprayed onto untreated steel panels. Solvent was allowed to flash off between passes and the primer was allowed to dry at ambient temperatures in about 15 minutes to form a primer coat about 100 microns (μm) thick.

The above prepared coating composition 1 was then sprayed onto aluminum panels primed with the above primer and allowed to flash dry between each pass of the spray gun and dried at ambient temperature for about 20 minutes to provide a total topcoating thickness of about 250 microns (μm). The coating has excellent resistance to corrosion by acids and alkali and excellent flexibility and weatherability.

Example 2

The following constituents were blended together and charged into a ball mill and ground until a uniform pigment dispersion was formed:

| | Parts By Weight |
|---|---|
| Chlorosulfonated polyethylene solution (described in Example 1) | 98.7 |
| Toluene | 296.0 |
| D.E.R. 331 epoxy resin (described in Example 1) | 42.4 |
| Carbon black pigment (Gulf acetylene black) | 37.2 |
| Graphite 200—9 (finely divided graphite) | 111.7 |
| Ethyl acetate | 82.8 |
| Toluene | 331.2 |
| Total | 1000.0 |

Composition A was prepared by blending together the following constituents:

| | Parts by Weight |
|---|---|
| Polyamine curing agent solution (described in Example 1) | 13.26 |
| Bicyclic amidine [1,8-diazabicyclo(5,4,0)undecene-7] | 3.06 |
| Toluene/ethyl acetate (50/50 blend) | 172.000 |
| Total | 188.32 |

Composition A was thoroughly blended with 300 parts of the pigment dispersion prepared above and reduced with toluene/ethyl acetate to a spray viscosity of about 25 seconds measured with a No. 2 Zahn cup to form a paint. The paint was sprayed onto a glass panel to a 25 microns μm dry film thickness and the electrical resistance was measured and was about 5—7 ohms.

A calcium alloy lead grid and an antimony alloy lead grid used in storage batteries were first coated with a 2% solution of gamma amino propyl trimethoxy silane and dried and then sprayed with the above paint and baked at about 65°C for about 1 hour. The resulting film was about 40 microns μm thick and had excellent adhesion to the lead substrate.

The coated lead grids were immersed in sulfuric acid solution and held at a 2.3 volt potential for 4 weeks. The coating did not blister or deteriorate and no corrosion of the substrate was noted. In comparison, uncoated lead grids exposed under the same conditions corroded severely.

Lead acid storage batteries made with the coated lead grids are expected to have a life of about 2—3 times that of batteries made with uncoated lead grids. Lead acid storage batteries can be made with grids that are $\frac{1}{3}$—$\frac{1}{2}$ of the weight of conventional uncoated grids and can be expected to have a life equivalent to that of a conventional battery. Also, lead acid storage batteries can be made of the same size as conventional batteries but with substantially more power since the grids can be made thinner and more grids can be used in the battery; hence, increasing power of the battery.

**Claims**

1. A coating composition comprising 10—80% by weight of binder and 20—90% by weight of an organic solvent; wherein the binder comprises:

(1) a chlorosulfonated polyethylene having a weight average molecular weight of 75,000 to 300,000 determined by gel permeation chromatography and having a chlorine content of 20 to 50% by weight and a sulfur content of 0.7 to 20% by weight;

(2) an epoxy resin; and

(3) a polyamine curing agent selected from the group consisting of:

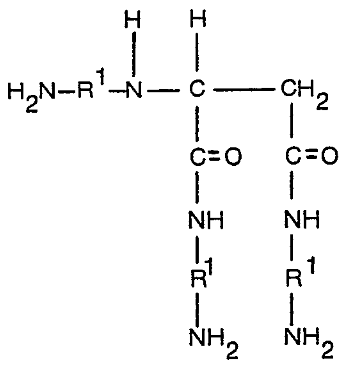

or

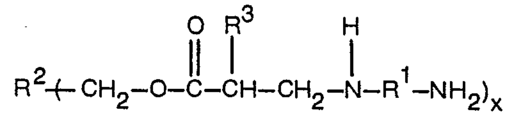

wherein $R^1$ is an aliphatic or cycloaliphatic radical; $R^2$ is a carbon atom or a hydrocarbon group, $R^3$ is H or $CH_3$, X is 3 or 4; when x is 3 $R^2$ is a hydrocarbon group and when x is 4 $R^2$ is a carbon atom.

2. A coating composition as claimed in claim 1 containing pigment in a pigment-to-binder weight ratio of 20:100 to 200:100.

3. A coating composition as claimed in claim 1 or claim 2 in which the chlorosulfonated polyethylene has the formula:

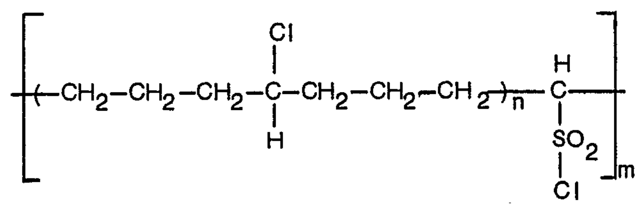

where m and n are positive integers of 5—25 and has a weight average molecular weight of 100,000 to 150,000.

4. A coating composition as claimed in any preceding claim in which the epoxy resion has the formula:

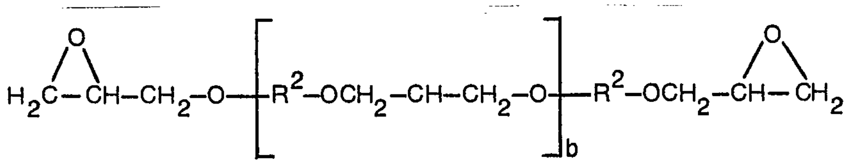

where $R^2$ is an aromatic radical and b is a positive integer of 0.5 to 4.

5. A coating composition as claimed in claim 4 in which $R^2$ is

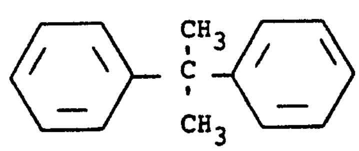

6. A coating composition as claimed in any one of claims 1 to 3 in which the epoxy resin is an epoxy novolac resin of the formula:

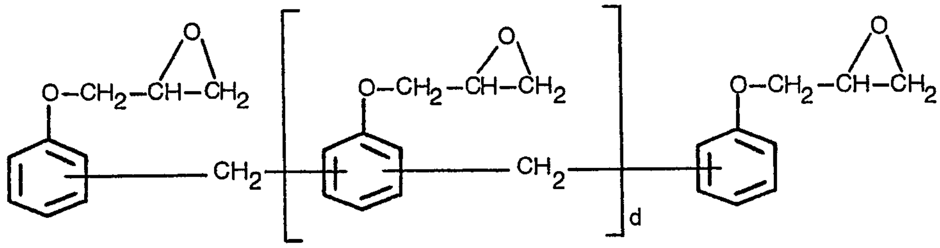

where d is a positive integer of 0.2—2.

7. A coating composition as claimed in any preceding claim in which the group $R^1—NH_2$ is

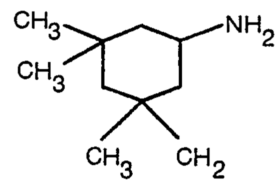

8. A coating composition as claimed in any preceding claim which additionally contains 0.1—3% by weight, based on the weight of the binder, of a bicyclic amidine.

9. A coating composition as claimed in claim 8 in which the bicyclic amidine is 1,8-diaza-bicyclo(5,4,0)-undecene-7.

10. A coating composition as claimed in claim 3 or any other preceding claim containing 0.1—3% by weight, based on the weight of the binder, of a fluorochemical surfactant.

11. A coating composition as claimed in any one of claims 1 to 7 which additionally contains 0.1—3% by weight, based on the weight of the binder of a strong organic base.

12. A coating composition as claimed in claim 11 in which the strong organic base is a tertiary alkyl ammonium hydroxide or a tertiary alkyl ammonium methoxide.

13. A coating composition according to any one of the preceding claims, which additionally contains 1 to 4%, based on the weight of the binder, of phenol.

14. A coating composition as claimed in any preceding claim in which the binder consists essentially of:

35—90% by weight of chlorosulfonated polyethylene, 7—60% by weight of epoxy resin, and
3—20% by weight of the polyamine curing agent.

15. A coating composition as claimed in claim 8 in which the binder consists essentially of:

40—85% by weight of chlorosulfonated polyethylene, 9—44% by weight of epoxy resin.
3—20% by weight of the polyamine curing agent, and
0.1—3% by weight of bicyclic amidine.

16. A coating composition as claimed in claim 2 in which the binder consists essentially of:

(1) 40—85% by weight, based on the weight of the binder, of a chlorosulfonated polyethylene having the formula:

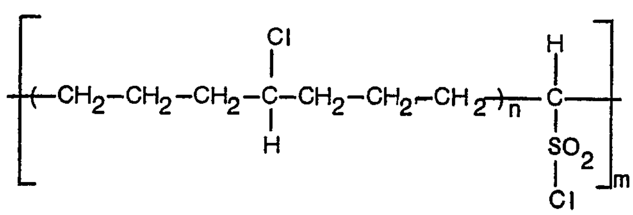

where m and n are positive integers of 5—25 and has a weight average molecular weight of 100,000 to 150,000.

(2) 9—44% by weight, based on the weight of the binder, of an epoxy resin of the formula:

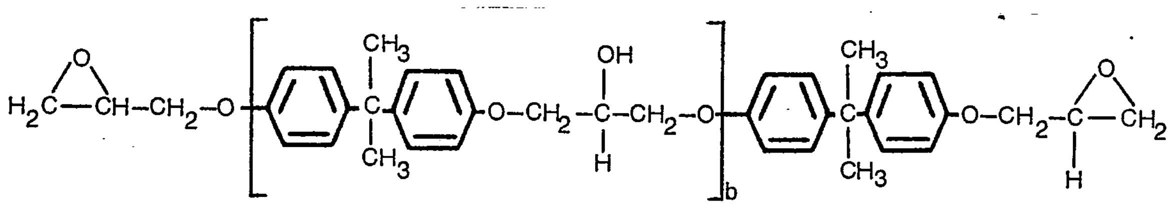

where b is a positive integer of 0.5 to 4;

(3) 3—20% by weight, based on the weight of the binder, of a polyamine curing agent of the formula:

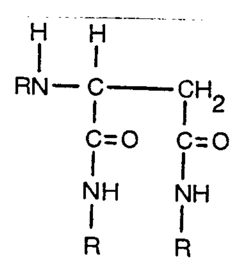

where R is

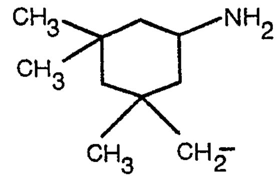

;

and

(4) 0.01—3% by weight of 1,8-diaza-bicyclo (5,4,0)-undecene-7.

17. A coating composition according to any one of the preceding claims which contains from 0.5 to 5% by weight, based on the weight of the binder, of a chloride ion scavenger.

18. A two-component composition wherein the two components are mixed together to form a composition comprising 10—80% by weight binder and 20—90% by weight organic solvent and wherein the components comprise:

component (1): solution of a chlorosulfonated polyethylene as defined in claim 1 and an epoxy resin;

component (2): a polyamine curing agent as defined in claim 1 and a bicyclic amidine or a strong organic base.

19. A substrate coated with a cured layer of a composition as claimed in any one of claims 1 to 18.

20. A metal substrate coated with a cured primer layer of the composition of any one of the preceding claims and having in superimposed adherence to the primer layer a cured layer of a fluorocarbon polymer comprising vinylidene fluoride and hexafluoropropylene.

21. A coating composition as claimed in claim 1, which additionally contains electrically conductive pigments in a pigment to binder weight ratio of 50:100 to 300:100, and wherein a dry film of the composition 25 microns (µm) thick has an electrical resistance of 1 to 50 ohms.

22. A coating composition as claimed in claim 21 in which the binder consists essentially of:

(1) 40—85% by weight, based on the weight of the binder, of a chlorosulfonated polyethylene having the formula:

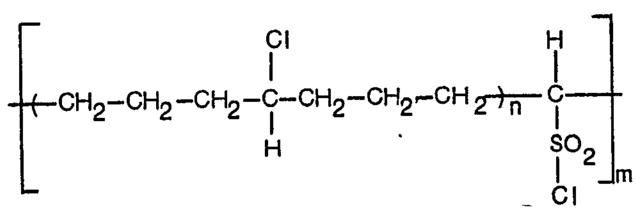

where m and n are positive integers of 5—25 and has a weight average molecular weight of 100,000 to 150,000.

(2) 9—44% by weight, based on the weight of the binder, of an epoxy resin of the formula:

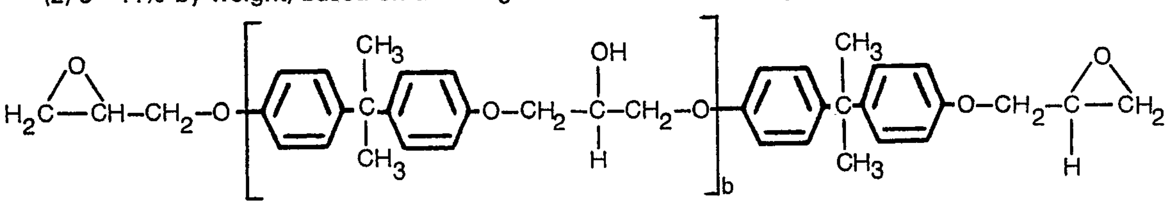

where by is a positive integer of 0.5 to 4;

(3) 3—20% by weight, based on the weight of the binder, of a polyamine curing agent of the formula:

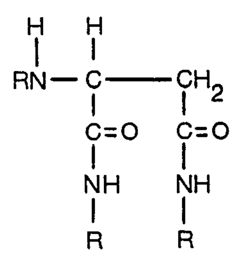

where R is

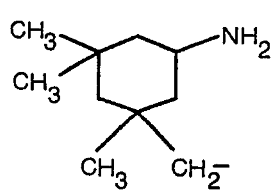

(4) 0.1—3% by weight of 1,8-diazabicyclo(5,4,0)-undecene-7; and
wherein the electrically conductive pigments comprise a mixture of carbon black pigment and finely divided graphite and wherein a dry film of the coating has an electrical resistance of 5—20 ohms.

23. A coating composition as claimed in claim 21 or 22 in which the electrically conductive pigments are a mixture of carbon black pigment and finely divided graphite.

24. A lead alloy grid for use in a lead-acid storage battery having a cured film of a coating composition as claimed in any one of claims 21 to 23.

25. A grid according to claim 24 wherein the film is 20 to 25 microns (µm) thick.

26. A process for coating lead alloy grids used in lead-acid electric storage batteries which process comprises:

(1) applying a thin coating of an amino silane to the grid; and

(2) applying a coating of the composition of any one of claims 21 to 23 and drying the composition to provide a cured film 10—200 microns (µm) thick.

27. A process according to claim 26 wherein the coating is cured by baking at 40 to 70°C.

**Patentansprüche**

1. Beschichtungszusammensetzung, welche 10 bis 80 Gew.-% Bindemittel und 20 bis 90 Gew.-% eines organischen Lösungsmittels umfaßt; worin das Bindemittel umfaßt:

(1) ein chlorsulfoniertes Polyethylen mit einem durch Gelpermeationschromatographie bestimmten Gewichtsmittel-Molekulargewicht von 75 000 bis 300 000 und einem Chlorgehalt von 20 bis 50 Gew.-% und einem Schwefelgehalt von 0,7 bis 20 Gew.-%;

(2) ein Epoxyharz; und

(3) einen Polyaminhärter, ausgewählt aus der aus

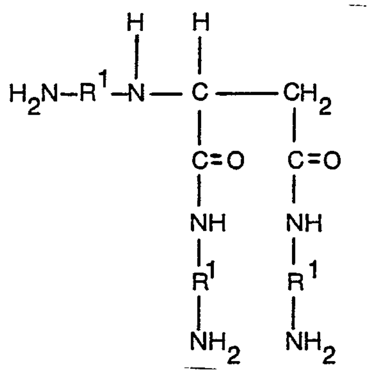

oder

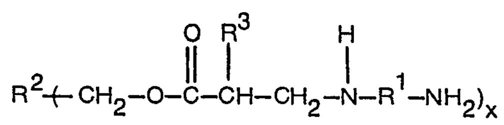

bestehenden Gruppe, worin $R^1$ ein aliphatischer oder cycloaliphatischer Rest ist; $R^2$ ein Kohlenstoffatom oder eine Kohlenwasserstoffgruppe ist, $R^3$ H oder $CH_3$ ist, x 3 oder 4 ist; wenn x 3 ist, $R^2$ eine Kohlenwasserstoffgruppe ist, und wenn x 4 ist, $R^2$ ein Kohlenstoffatom ist.

2. Beschichtungszusammensetzung, wie in Anspruch 1 beansprucht, welche ein Pigment in einem Pigment-zu-Bindemittel-Gewichtsverhältnis von 20:100 bis 200:100 enthält.

3. Beschichtungszusammensetzung, wie in Anspruch 1 oder Anspruch 2 beansprucht, in welcher das chlorsulfonierte Polyethylen die Formel hat:

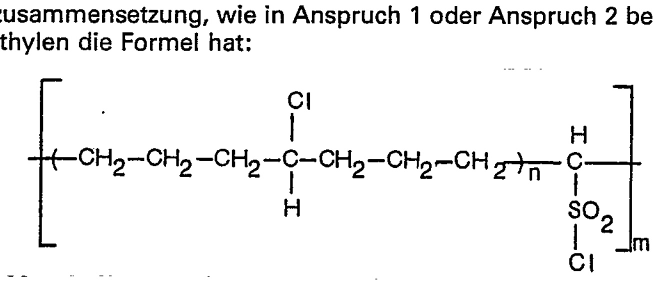

worin m und n positive Zahlen von 5 bis 25 sind und welches ein Gewichtsmittel-Molekulargewicht von 100 000 bis 150 000 hat.

4. Beschichtungszusammensetzung, wie in einem vorstehenden Anspruch beansprucht, in welcher das Epoxyharz die Formel hat:

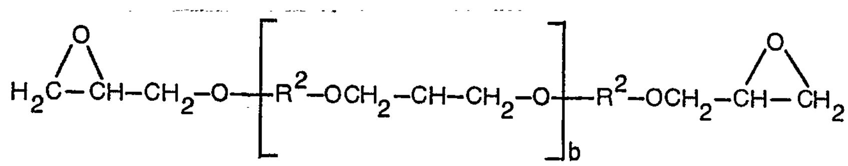

worin $R^2$ ein aromatischer Rest ist und b eine positive Zahl von 0,5 bis 4 ist.

5. Beschichtungszusammensetzung, wie in Anspruch 4 beansprucht, in welcher $R^2$

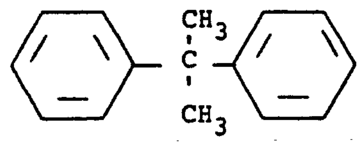

ist.

6. Beschichtungszusammensetzung, wie in einem der Ansprüche 1 bis 3 beansprucht, in welcher das Epoxyharz ein Epoxynovolakharz der Formel ist:

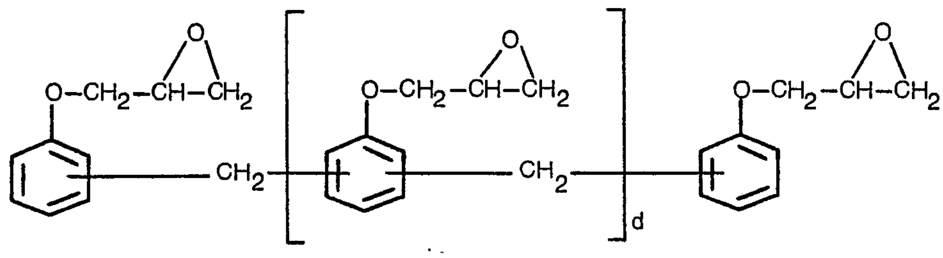

worin d eine positive Zahl von 0,2 bis 2 ist.

7. Beschichtungszusammensetzung, wie in einem vorstehenden Anspruch beansprucht, in welcher die Gruppe $R^1$—$NH^2$

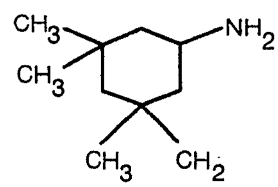

ist.

8. Beschichtungszusammensetzung, wie in einem vorstehenden Anspruch beansprucht, welche zusätzlich 0,1 bis 3 Gew.-%, bezogen auf das Gewicht des Bindemittels, eines bicyclischen Amidins enthält.

9. Beschichtungszusammensetzung, wie in Anspruch 8 beansprucht, in welcher das bicyclische Amidin 1,8-Diazabicyclo-(5,4,0)-undecen-7 ist.

10. Beschichtungszusammensetzung, wie in Anspruch 3 oder einem anderen vorstehenden Anspruch beansprucht, welches 0,1 bis 3 Gew.-%, bezogen auf das Gewicht des Bindemittels, eines fluorchemischen oberflächenaktiven Mittels enthält.

11. Beschichtungszusammensetzung, wie in einem der Ansprüche 1 bis 7 beansprucht, welches zusätzlich 0,1 bis 3 Gew.-%, bezogen auf das Gewicht des Bindemittels, einer starken organischen Base enthält.

12. Beschichtungszusammensetzung, wie in Anspruch 11 beansprucht, in welcher die starke organische Base ein tertiäres Alkylammoniumhydroxid oder ein tertiäres Alkylammoniummethoxid ist.

13. Beschichtungszusammensetzung nach einem der vorstehenden Ansprüche, welches zusätzlich 1 bis 4%, bezogen auf das Gewicht des Bindemittels, Phenol enthält.

14. Beschichtungszusammensetzung, wie in einem vorstehenden Anspruch beansprucht, in welcher das Bindemittel im wesentlichen besteht aus:

35 bis 90 Gew.-% chlorsulfoniertem Polyethylen,
7 bis 60 Gew.-% Epoxyharz, und
3 bis 20 Gew.-% des Polyaminhärters.

15. Beschichtungszusammensetzung, wie in Anspruch 8 beansprucht, in welcher das Bindemittel im wesentlichen besteht aus:

40 bis 85 Gew.-% chlorsulfoniertem Polyethylen,
9 bis 44 Gew.-% Epoxyharz,
3 bis 20 Gew.-% des Polyaminhärters, und
0,1 bis 3 Gew.-% bicyclischem Amidin.

16. Beschichtungszusammensetzung, wie in Anspruch 2 beansprucht, in welcher das Bindemittel im wesentlichen besteht aus:

(1) 40 bis 85 Gew.-%, bezogen auf das Gewicht des Bindemittels, eines chlorsulfonierten Polyethylens der Formel:

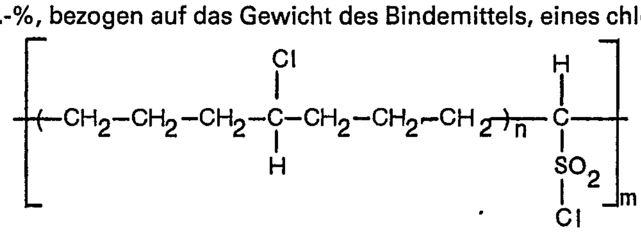

worin m und n positive Zahlen von 5 bis 25 sind und welches ein Gewichtsmittel-Molekulargewicht von 100 000 bis 150 000 hat;

(2) 9 bis 44 Gew.-%, bezogen auf das Gewicht des Bindemittels, eines Epoxyharzes der Formel:

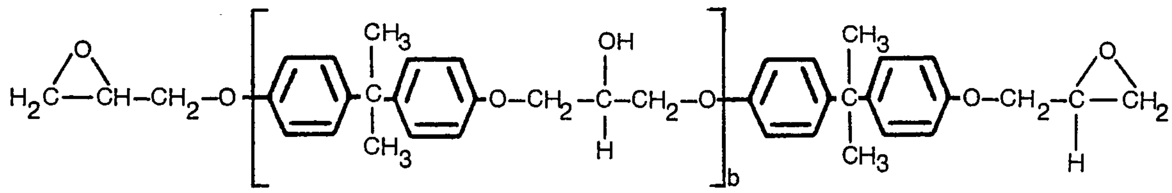

worin b eine positive Zahl von 0,5 bis 4 ist;

(3) 3 bis 20 Gew.-%, bezogen auf das Gewicht des Bindemittels, eines Polyaminhärters der Formel:

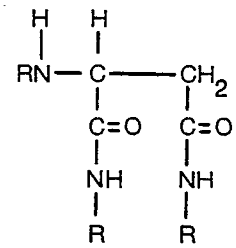

worin R

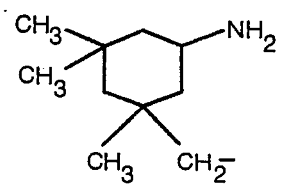

ist; und

(4) 0,01 bis 3 Gew.-% 1,8-Diazabicyclo-(5,4,0)-undecen-7.

17. Beschichtungszusammensetzung nach einem der vorstehenden Ansprüche, welche 0,5 bis 5 Gew.-%, bezogen auf das Gewicht des Bindemittels, eines Chloridionenfängers enthält.

18. Zweikomponentenzusammensetzung, worin die beiden Komponenten unter Bildung einer Zusammensetzung zusammengemischt sind, die 10 bis 80 Gew.-% Bindemittel und 20 bis 90 Gew.-% organisches Lösungsmittel umfasst, und worin die Komponenten umfassen:

Komponente (1): die Lösung eines chlorsulfonierten Polyethylens, wie in Anspruch 1 definiert, und ein Epoxyharz;

Komponente (2): einen Polyaminhärter, wie in Anspruch 1 definiert, und ein bicyclisches Amidin oder eine starke organische Base.

19. Substrat, beschichtet mit einer gehärteten Schicht einer in einem der Ansprüche 1 bis 18 beanspruchten Zusammensetzung.

20. Metallsubstrat, beschichtet mit einer gehärteten Primerschicht der Zusammensetzung eines der vorstehenden Ansprüche und mit einer gehärteten Schicht aus einem Fluorkohlenstoffpolymer in aufliegender Haftung an der Primerschicht, welches Vinylidenfluorid und Hexafluorpropylen umfaßt.

21. Beschichtungszusammensetzung, wie in Anspruch 1 beansprucht, welche zusätzlich elektrisch leitende Pigmente in einem Pigment-zu-Bindemittel-Gewichtsverhältnis von 50:100 bis 300:100 enthält, wobei ein trockener Film aus der Zusammensetzung von 25 Mikron (µm) Dicke einen elektrischen Widerstand von 1 bis 50 Ohm hat.

22. Beschichtungszusammensetzung, wie in Anspruch 21 beansprucht, in welcher das Bindemittel im wesentlichen besteht aus:

(1) 40 bis 85 Gew.-%, bezogen auf das Gewicht des Bindemittels, eines chlorsulfonierten Polyethylens der Formel

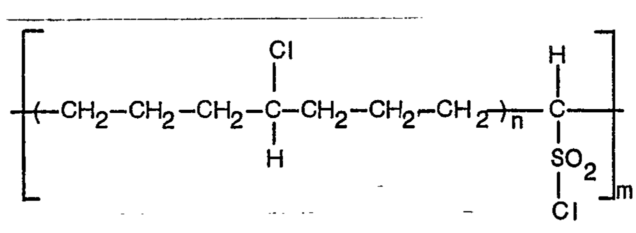

worin m und n positive Zahlen von 5 bis 25 sind und welches ein Gewichtsmittel-Molekulargewicht von 100 000 bis 150 000 hat;

(2) 9 bis 44 Gew.-%, bezogen auf das Gewicht des Bindemittels, eines Epoxyharzes der Formel:

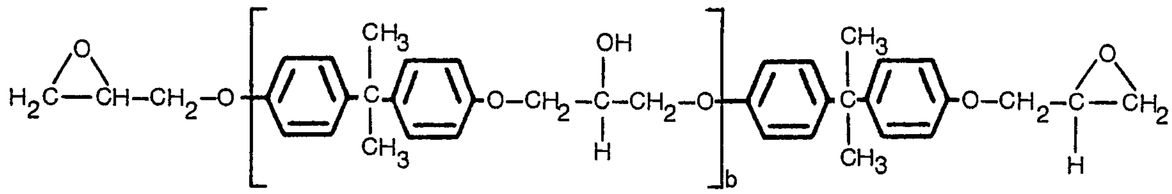

worin b eine positive Zahl von 0,5 bis 4 ist;

(3) 3 bis 20 Gew.-%, bezogen auf das Gewicht des Bindemittels, eines Polyaminhärters der Formel:

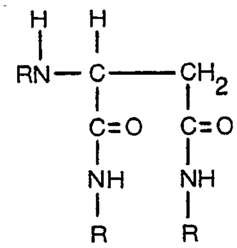

worin R

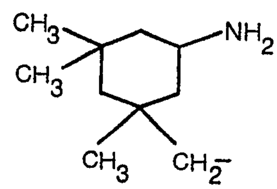

ist; und

(4) 0,1 bis 3 Gew.-% 1,8-Diazabicyclo-(5,4,0)-undecen-7; und

worin die elektrisch leitenden Pigmente eine Mischung aus Rußpigment und fein verteiltem Graphit umfassen, wobei ein trockener Film der Beschichtung einen elektrischen Widerstand von 5 bis 20 Ohm hat.

23. Beschichtungszusammensetzung, wie in Anspruch 21 oder 22 beansprucht, in welcher die elektrisch leitenden Pigmente eine Mischung aus Rußpigment und fein verteiltem Graphit sind.

24. Bleilegierungsgitter zur Verwendung in einer Blei-Säure-Speicherbatterie mit einer gehärteten Folie aus einer Beschichtungszusammensetzung, wie in einem der Ansprüche 21 bis 23 beansprucht.

25. Gitter nach Anspruch 24, worin die Folie 20 bis 25 Mikron (µm) dick ist.

26. Verfahren zur Beschichtung von in elektrischen Blei-Säure-Speicherbatterien verwandten Bleilegierungsgittern, welches Verfahren umfaßt:

(1) die Aufbringung einer dünnen Beschichtung eines Aminosilans auf das Gitter; und

(2) die Aufbringung einer Beschichtung aus der Zusammensetzung eines der Ansprüche 21 bis 23 und die Trocknung der Zusammensetzung zur Ausbildung eines gehärteten Films von 10 bis 200 Mikron (µm) Dicke.

27. Verfahren nach Anspruch 26, worin die Beschichtung durch Backen bei 40 bis 70°C gehärtet wird.

## Revendications

1. Une composition de revêtement comprenant 10 à 80% en poids de liant et 20 à 90% en poids d'un solvant organique, dans laquelle le liant comprend:

(1) un polyéthylène chlorosulfoné ayant un poids moléculaire moyen en poids de 75 000 à 300 000, déterminé par chromatographie par perméation sur gel, et ayant une teneur en chlore de 20 à 50% en poids et une teneur en soufre de 0,7 à 2,0% en poids;

(2) une résine époxyde; et

(3) un agent durcisseur polyamino choisi dans le groupe formé par:

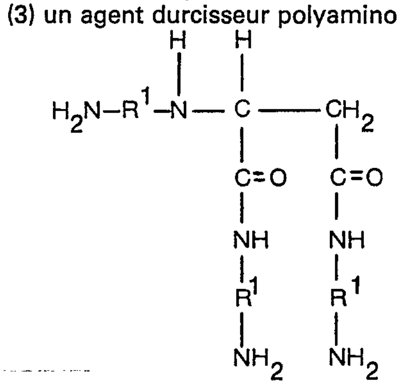

ou

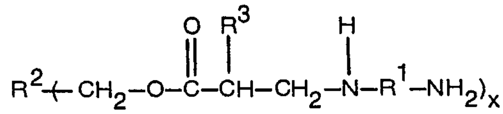

où

$R^1$ est un radical aliphatique ou cycloaliphatique,

$R^2$ est un atome de carbone ou un groupe hydrocarboné,

$R^3$ est H ou $CH_3$, x est 3 ou 4; si x est 3, $R^2$ est un groupe hydrocarboné, et si x est 4, $R^2$ est un atome de carbone.

2. Une composition de revêtement telle que revendiquée dans la revendication 1, contenant un pigment en un rapport pondéral du pigment au liant de 20:100 à 200:100.

3. Une composition de revêtement telle que revendiquée dans la revendication 1 ou la revendication 2, dans laquelle le polyéthylène chlorosulfoné répond à la formule:

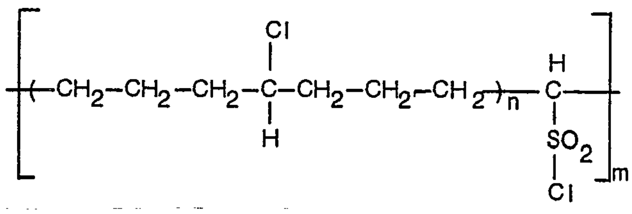

où m et n sont des nombres entiers positifs de 5 à 25, et a un poids moléculaire moyen en poids de 100 000 à 150 000.

4. Une composition de revêtement telle que revendiquée dans l'une quelconque des revendications précédentes, dans laquelle la résine époxyde répond à la formule:

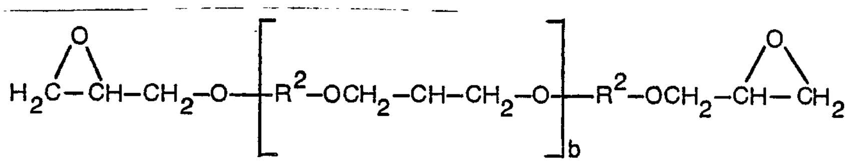

où $R^2$ est un radical aromatique et b est un nombre entier positif de 0,5 à 4.

5. Une composition de revêtement telle que revendiquée dans la revendication 4, dans laquelle $R^2$ est

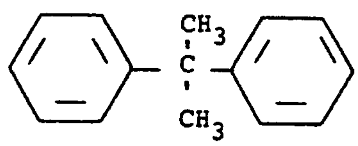

6. Une composition de revêtement telle que revendiquée dans l'une quelconque des revendications 1 à 3, dans laquelle la résine époxyde est une résine novolaque époxyde de la formule:

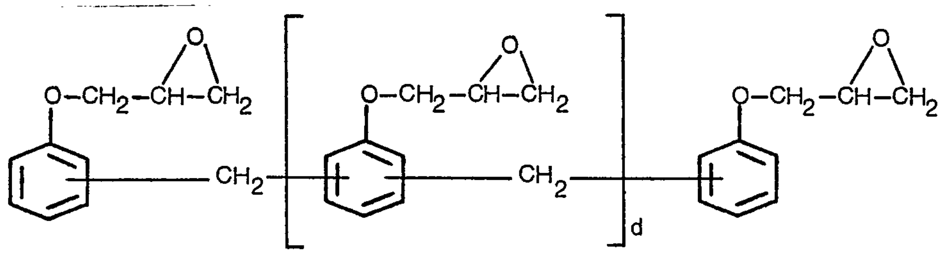

où d est un nombre entier positif de 0,2 à 2.

7. Une composition de revêtement telle que revendiquée dans l'une quelconque des revendications précédentes, dans laquelle le groupe $R^1—NH_2$ est

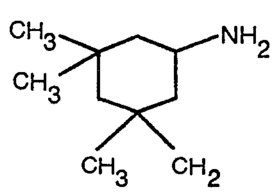

8. Une composition de revêtement telle que revendiquée dans l'une quelconque des revendications précédentes, qui contient de plus 0,1 à 3% en poids, par rapport au poids du liant, d'une amidine bicyclique.

9. Une composition de revêtement telle que revendiquée dans la revendication 8, dans laquelle l'amidine bicyclique est le 1,8-diaza-bicyclo(5,4,0)-undécène-7.

10. Une composition de revêtement telle que revendiquée dans la revendication 3 ou une quelconque autre revendication précédente, contenant 0,1 à 3% en poids, par rapport au poids du liant, d'un agent tensioactif fluoré.

11. Une composition de revêtement telle que revendiquée dans l'une quelconque des revendications 1 à 7, qui contient de plus 0,1 à 3% en poids, par rapport au poids du liant, d'une base organique forte.

12. Une composition de revêtement telle que revendiquée dans la revendication 11, dans laquelle la base organique forte est un hydroxyde d'alkyl-ammonium tertiaire ou un méthylate d'alkyl-ammonium tertiaire.

13. Une composition de revêtement selon l'une quelconque des revendications précédentes, qui contient de plus 1 à 4%, par rapport au poids du liant, de phénol.

14. Une composition de revêtement telle que revendiquée dans l'une quelconque des revendications précédentes, dans laquelle le liant se compose essentiellement de:

35 à 90% en poids de polyéthylène chlorosulfoné,
7 à 60% en poids de résine époxyde, et
3 à 20% en poids de l'agent durcisseur polyamine.

15. Une composition de revêtement telle que revendiquée dans la revendication 8, dans laquelle le liant se compose essentiellement de:

40 à 85% en poids de polyéthylène chlorosulfoné,
9 à 44% en poids de résine époxyde,
3 à 20% en poids de l'agent durcisseur polyamine, et
0,1 à 3% en poids d'amidine bicyclique.

16. Une composition de revêtement telle que revendiquée dans la revendication 2, dans laquelle le liant se compose essentiellement de:

(1) 40 à 85% en poids, par rapport au poids du liant, d'un polyéthylène chlorosulfoné répondant à la formule:

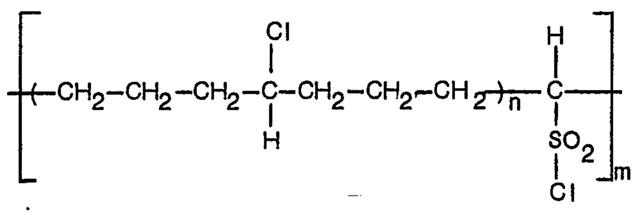

où m et n sont des nombres entiers positifs de 5 à 25, et ayant un poids moléculaire moyen en poids de 100 000 à 150 000;

(2) 9 à 44% en poids, par rapport au poids du liant, d'une résine époxyde de la formule:

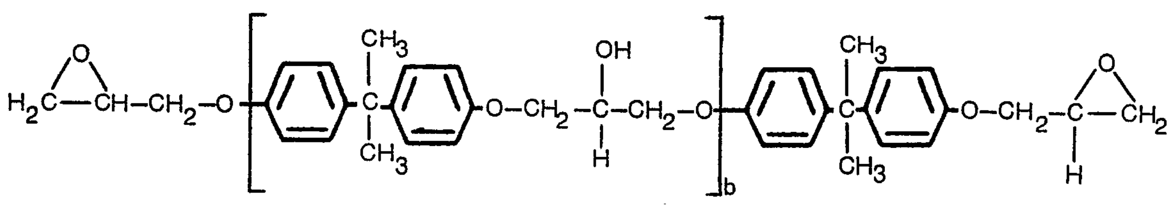

où b est un nombre entier positif de 0,5 à 4;

(3) 3 à 20% en poids, par rapport au poids du liant, d'un agent durcisseur polyamine de la formule:

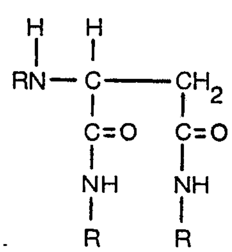

où R est

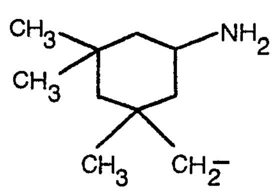

; et

(4) 0,01 à 3% en poids de 1,8-diaza-bicyclo(5,4,0)undécène-7.

17. Une composition de revêtement selon l'une quelconque des revendications précédentes, qui contient 0,5 à 5% en poids, par rapport au poids du liant, d'un épurateur d'ions chlorure.

18. Une composition à deux composants dont les deux composants sont mélangés pour former une composition comprenant 10 à 80% en poids de liant et 20 à 90% en poids de solvant organique, et dans laquelle les composants comprennent:

composant (1): une solution d'un polyéthylène chlorosulfoné tel que défini dans la revendication 1 et d'une résine époxyde;

composant (2): un agent durcisseur polyamine tel que défini dans la revendication 1 et une amidine bicyclique ou une base organique forte.

19. Un substrat revêtu par une couche durcie d'une composition telle que revendiquée dans l'une quelconque des revendications 1 à 18.

20. Un substrat métallique revêtu par une couche primaire durcie de la composition de l'une quelconque des revendications précédentes et portant, superposée par adhérence à la couche primaire, une couche durcie d'un polymère fluorocarboné comprenant du fluorure de vinylidène et de l'hexafluoropropylène.

21. Une composition de revêtement telle que revendiquée dans la revendication 1, qui contient de plus des pigments électriquement conducteurs en un rapport pondéral des pigments au liant de 50:100 à 300:100, la résistance électrique d'une couche sèche de la composition mesurant 25 micromètres (µm) d'épaisseur étant de 1 à 50 ohms.

22. Une composition de revêtement telle que revendiquée dans la revendication 21, dans laquelle le liant se compose essentiellement de:

(1) 40 à 85% en poids, par rapport au poids du liant, d'un polyéthylène chlorosulfoné répondant à la formule:

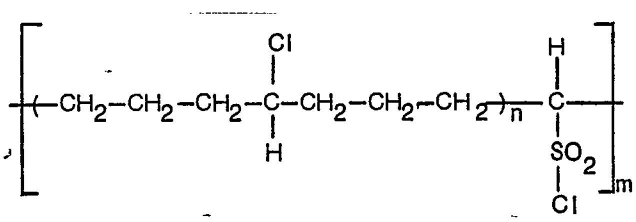

où m et n sont des nombres entiers positifs de 5 à 25, et ayant un poids moléculaire moyen en poids de 100 000 à 150 000;

(2) 9 à 44% en poids, par rapport au poids du liant, d'une résine époxyde de la formule:

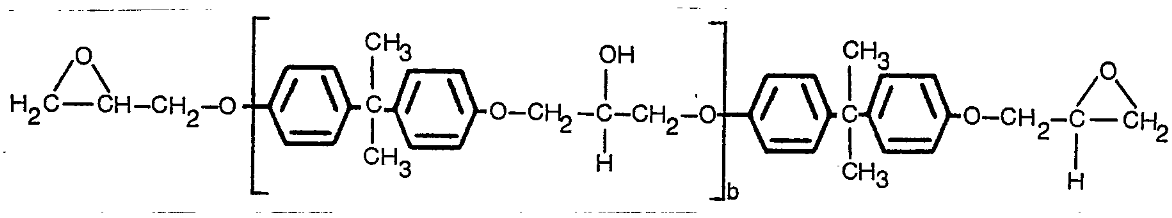

où b est un nombre entier positif de 0,5 à 4;

(3) 3 à 20% en poids, par rapport au poids du liant, d'un agent durcisseur polyamine de la formule

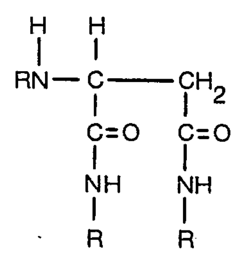

où R est

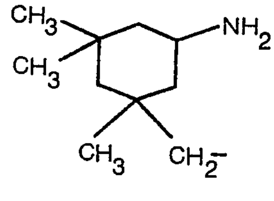

; et

(4) 0,1 à 3% en poids de 1,8-diaza-bicyclo(5,4,0)-undécène-7,

et dans laquelle les pigments électriquement conducteurs comprennent un mélange de pigment noir de carbone et de graphite finement divisé, la résistance électrique d'une couche sèche du revêtement étant de 5 à 20 ohms.

23. Une composition de revêtement telle que revendiquée dans la revendication 21 ou 22, dans laquelle les pigments électriquement conducteurs sont un mélange de pigment noir de carbone et de graphite finement divisé.

24. Une grille en alliage de plomb pour utilisation dans un accumulateur plomb-acide, portant une couche mince durcie d'une composition de revêtement telle que revendiquée dans l'une quelconque des revendications 21 à 23.

25. Une grille selon la revendication 24, dans laquelle la couche mince est épaisse de 20 à 25 micromètres (μm).

26. Un procédé pour revêtir des grilles en alliage de plomb utilisées dans des accumulateurs électriques plomb-acide, ce procédé consistant à:

(1) appliquer un revêtement mince d'un amino-silane à la grille; et

(2) appliquer un revêtement de la composition de l'une quelconque des revendications 21 à 23 et sécher la composition pour obtenir une couche mince durcie épaisse de 10 à 200 micromètres (μm).

27. Un procédé selon la revendication 26, dans lequel le revêtement est durci par cuisson à une température de 40 à 70°C.